# EUROPEAN PATENT APPLICATION

(11) **EP 4 586 453 A1**
(43) Date of publication of application: **16.07.2025**
(21) Application number: 24200195.6
(22) Date of filing: 13.09.2024
(51) Int. Cl.: H02J 7/00, H02J 7/34

(54) **BATTERY SELF-HEATING CIRCUIT, METHOD, DEVICE, AND VEHICLE**

(30) Priority: 09.01.2024 CN 202410033890
(71) Applicant: Xiaomi EV Technology Co., Ltd., 100176 Beijing (CN)
(72) Inventor: SONG, Deru, Beijing 100176 (CN); REN, Deqiang, Beijing 100176 (CN); LI, Mingyuan, Beijing 100176 (CN); LI, Hongfei, Beijing 100176 (CN)
(74) Representative: Stöckeler, Ferdinand

(57) **Abstract**

A battery self-heating circuit (100), a method, a device and a vehicle are provided. The battery self-heating circuit (100) includes: a battery pack (10) and a power conversion circuit (102). The battery pack (10) includes a first battery group (101) and a second battery group (102) connected in series. The power conversion circuit (102) is configured to perform electric power exchange between the first battery group (101) and the second battery group (102) to realize self-heating of the battery pack (10).

## Description

### TECHNICAL FIELD

The present invention relates to the technical field of new energy vehicles, and in particular to a battery self-heating circuit, a method, a device and a vehicle.

### BACKGROUND

With the development of automotive technology, for electric vehicles, charging speed has gradually become a constraint on the development of electric vehicles, especially the degradation of battery performance caused by low temperature in winter, which affects the charging performance of electric vehicles. Therefore, the rapid heating of the battery before charging becomes a key requirement.

### SUMMARY

The invention is set out in the appended set of claims.

In order to overcome the problems existing in the related art, according to a first aspect of embodiments of the present invention, there is provided a battery self-heating circuit, and the battery self-heating circuit includes: a battery pack and a power conversion circuit. The battery pack includes a first battery group and a second battery group connected in series. The power conversion circuit is configured to perform electric power exchange between the first battery group and the second battery group to realize self-heating of the battery pack.

Optionally, the power conversion circuit includes: a switching circuit and an energy storage circuit. The switching circuit is connected to the battery pack through the energy storage circuit; and the energy storage circuit and the switching circuit are configured to control the electric power exchange between the first battery group and the second battery group to realize the self-heating of the battery pack.

Optionally, the energy storage circuit and the switching circuit are configured to receive a first electric power output by the first battery group and release the first electric power to the second battery group; the energy storage circuit and the switching circuit are also configured to receive a second electric power output by the second battery group and release the second electric power to the first battery group.

Optionally, the switching circuit includes: a first switching tube, a second switching tube, a third switching tube, a fourth switching tube, a fifth switching tube, and a sixth switching tube. The energy storage circuit includes: a first energy storage inductor, a second energy storage inductor and a third energy storage inductor. The first switching tube and the second switching tube are connected in series between a positive electrode of the first battery group and a negative electrode of the second battery group. The third switching tube and the fourth switching tube are connected in series between the positive electrode of the first battery group and the negative electrode of the second battery group. The fifth switching tube and the sixth switching tube are connected in series between the positive electrode of the first battery group and the negative electrode of the second battery group. The first energy storage inductor is connected in series between a connection point of the first switching tube and the second switching tube and a negative electrode of the first battery group. The second energy storage inductor is connected in series between a connection point of the third switch and the fourth switch and the negative electrode of the first battery group. The third energy storage inductor is connected in series between a connection point of the fifth switch and the sixth switch and the negative electrode of the first battery group.

Optionally, a connection point of the first energy storage inductor, the second energy storage inductor and the third energy storage inductor includes a motor neutral point of an electric vehicle, and the motor neutral point is connected to a connection point of the first battery group and the second battery group.

Optionally, the first switching tube, the second switching tube, the third switching tube, the fourth switching tube, the fifth switching tube, and the sixth switching tube include a power device of an electric drive system of the electric vehicle.

According to a second aspect of embodiments of the present invention, there is provided a battery self-heating method appliable to a battery self-heating circuit, the battery self-heating circuit includes a battery pack and a power conversion circuit, the battery pack includes a first battery group and a second battery group connected in series; and the method includes: performing electric power exchange between the first battery group and the second battery group through the power conversion circuit to realize self-heating of the battery pack.

Optionally, the power conversion circuit includes: a switching circuit and an energy storage circuit, and the switching circuit is connected to the battery pack through the energy storage circuit. Performing the electric power exchange between the first battery group and the second battery group through the power conversion circuit to realize the self-heating of the battery pack includes: controlling electric power to exchange between the first battery group and the second battery group through the switching circuit and the energy storage circuit to realize the self-heating of the battery pack.

Optionally, controlling electric power to exchange between the first battery group and the second battery group through the switching circuit and the energy storage circuit to realize the self-heating of the battery pack includes repeatedly performing the following steps through the energy storage circuit and the switching circuit to realize the self-heating of the battery pack: receiving a first electric power output by the first battery group through the energy storage circuit and the switching circuit and releasing the first electric power to the second battery group; and receiving a second electric power output by the second battery group through the energy storage circuit and the switching circuit and releasing the second electric power to the first battery group.

Optionally, the switching circuit includes: a first switching tube, a second switching tube, a third switching tube, a fourth switching tube, a fifth switching tube, and a sixth switching tube. The energy storage circuit includes: a first energy storage inductor, a second energy storage inductor and a third energy storage inductor. The first switching tube and the second switching tube are connected in series between a positive electrode of the first battery group and a negative electrode of the second battery group. The third switching tube and the fourth switching tube are connected in series between the positive electrode of the first battery group and the negative electrode of the second battery group. The fifth switching tube and the sixth switching tube are connected in series between the positive electrode of the first battery group and the negative electrode of the second battery group. The first energy storage inductor is connected in series between a connection point of the first switching tube and the second switching tube and a negative electrode of the first battery group. The second energy storage inductor is connected in series between a connection point of the third switch and the fourth switch and the negative electrode of the first battery group. The third energy storage inductor is connected in series between a connection point of the fifth switch and the sixth switch and the negative electrode of the first battery group. Receiving the first electric power output by the first battery group through the energy storage circuit and the switching circuit and releasing the first electric power to the second battery group includes: opening the first switching tube, the third switching tube and the fifth switching tube, closing the second switching tube, the fourth switching tube and the sixth switching tube to control the first energy storage inductor, the second energy storage inductor and the third energy storage inductor to receive the first electric power from the first battery group and store the first electric power; and opening the second switching tube, the fourth switching tube and the sixth switching tube, closing the first switching tube, the third switching tube and the fifth switching tube to control the first energy storage inductor, the second energy storage inductor and the third energy storage inductor to send the first electric power to the second battery group.

Optionally, receiving the second electric power output by the second battery group through the energy storage circuit and the switching circuit and releasing the second electric power to the first battery group includes: opening the second switching tube, the fourth switching tube and the sixth switching tube, closing the first switching tube, the third switching tube and the fifth switching tube to control the first energy storage inductor, the second energy storage inductor and the third energy storage inductor to receive the second electric power from the second battery group and store the second electric power; and closing the second switching tube, the fourth switching tube and the sixth switching tube, and opening the first switching tube, the third switching tube and the fifth switching tube to control the first energy storage inductor, the second energy storage inductor and the third energy storage inductor to send the second electric power to the first battery group.

Optionally, when power of the first battery group is greater than power of the second battery group, and a temperature of the battery pack is greater than a temperature threshold, the first electric power is controlled to be greater than the second electric power to equalize the power of the first battery group to the second battery group during the self-heating of the battery pack; when the power of the first battery group is less than the power of the second battery group, and the temperature of the battery pack is greater than the temperature threshold, the first electric power is controlled to be less than the second electric power, to equalize the power of the second battery group to the first battery group during the self-heating of the battery pack.

According to a third aspect of embodiments of the present invention, there is provided a battery self-heating control device, and the battery self-heating control device includes a processor and a memory. The memory is configured to store executable instructions of the processor. The processor is configured to execute the executable instructions to achieve a method as described in any of the second aspect.

According to a fourth aspect of embodiments of the present invention, there is provided a computer-readable storage medium, computer program instructions are stored on the computer-readable storage medium, and steps of the method as described in any of the second aspect is implemented when the program instructions are executed by a processor.

According to a fifth aspect of embodiments of the present invention, there is provided a chip. The chip includes a processor and an interface. The processor is configured to read instructions to perform a method as described in any of the second aspect.

According to a sixth aspect of embodiments of the present invention, there is provided a vehicle. The vehicle includes a battery self-heating circuit as described in any of the first aspect and a battery self-heating control device as described in the third aspect.

To sum up, embodiments of the present invention provide a battery self-heating circuit, and the battery self-heating circuit includes a battery pack and a power conversion circuit; the battery pack includes a first battery group and a second battery group connected in series; and the power conversion circuit is configured to perform electric power exchange between the first battery group and the second battery group to realize the self-heating of the battery pack. Embodiments of the present invention utilize high impedance characteristics of a battery at a low temperature to generate a large amount of electrochemical thermal energy in a process of charging and discharging, to realize heating of the battery from inside. The battery heating method effectively overcomes limitation of a heating speed due to low thermal conductivity of the battery's own material, and simplifies a heat conduction path. Therefore, the battery self-heating circuit has advantages of fast heating speed, low energy consumption and high heating temperature uniformity of the battery.

It should be understood that the above general description and the detailed description following are only illustrative and explanatory and do not limit the present invention.

### BRIEF DESCRIPTION OF THE DRAWINGS

The drawings herein are incorporated into the description and form part of the specification, show embodiments conforming to the present invention and are configured together with the description to explain the principles of the present invention.
FIG. 1 is a schematic diagram of a battery self-heating circuit shown according to an exemplary embodiment.
FIG. 2 is a schematic diagram of a battery self-heating circuit shown according to an exemplary embodiment.
FIG. 3 is a flow chart of a battery self-heating method shown according to an exemplary embodiment.
FIG. 4 is a flow chart of a battery self-heating method shown according to an exemplary embodiment.
FIG. 5 is a flow chart of a battery self-heating method shown according to an exemplary embodiment.
FIG. 6 is a flow chart of a battery self-heating method shown according to an exemplary embodiment.
FIG. 7 is a flow chart of a battery self-heating method shown according to an exemplary embodiment.
FIG. 8 is a block diagram of a battery self-heating control device shown according to an exemplary embodiment.
FIG. 9 is a block diagram of a vehicle shown according to an exemplary embodiment.

### DETAILED DESCRIPTION

Exemplary embodiments are described in detail here, and examples are shown in the accompanying drawings. When the following description relates to drawings, the same number in different drawings represents the same or similar features, unless otherwise indicated. The implementations described in the following exemplary embodiments do not represent all implementations consistent with the present invention. Rather, they are only examples of devices and methods that are consistent with some aspects of the present invention, as detailed in the attached claims.

It should be understood that the term "including" and its variations configured herein are open to including, i.e., "including but not limited to". The term "based on" is "at least partially based on". The term "one embodiment" means "at least one embodiment". The term "another embodiment" means "at least one additional embodiment". The term "some embodiments" means "at least some embodiments". The relevant definitions of other terms are given in the following descriptions.

It should be noted that the concepts "first", "second", etc., mentioned in the present invention are only configured to distinguish different devices, modules or units, and are not configured to define the order or interdependence of the functions performed by these devices, modules or units. The modifications of "one" and "a plurality of" mentioned in the present invention are indicative and not restrictive, and those skilled in the art should understand that they should be understood to mean "one or more" unless the context expressly indicates otherwise. In the description of the present invention, unless otherwise specified, "a plurality of' means two or more than two, and other quantifiers are similar to them; and "at least one", "one or more", or similar expressions means any combination of these terms, including any combination of single or plural terms.

Although the operations or steps are described in a particular order in the drawings, they should not be construed as requiring them to be performed in the specific order shown or in a serial order, or to require all of the operations or steps shown to obtain the desired result. In embodiments of the present invention, these operations or steps may be performed serially, these operations or steps may be performed in parallel, or some of these operations or steps may be performed.

The names of messages or information exchanged between a plurality of devices in embodiments of the disclosure are for illustrative purposes only and are not intended to limit the scope of such messages or information. It is understandable that before using the technical solutions disclosed in each embodiment of the present invention, the type, scope of use, and use scenarios of the personal information involved in the present invention shall be informed to the user and the user's authorization shall be obtained through appropriate methods in accordance with relevant laws and regulations. The present invention is described below in conjunction with specific embodiments.

First, the application scenarios of the present invention are described. With the development of automotive technology, for electric vehicles, charging speed has gradually become a constraint on the development of electric vehicles, especially the degradation of battery performance caused by low temperature in winter, which affects the charging performance of electric vehicles. Therefore, the rapid heating of the battery before charging becomes a key requirement. The traditional PTC heater is an external heat source for battery heating, and the battery heating rate and heating efficiency are obviously insufficient, which cannot realize the rapid heating of the battery. Embodiments of the present invention utilize an increase of an internal resistance of the battery at a low temperature, applies a pulse current to the battery for charging and discharging, and the internal resistance of the battery generates Joule heat inside the battery, to realize heating of the battery from inside. This battery heating method effectively overcomes the limitation of the heating speed due to the low thermal conductivity of the battery's own material, and simplifies the heat conduction path. Therefore, the battery self-heating circuit has the advantages of fast heating speed, low energy consumption and high heating temperature uniformity.

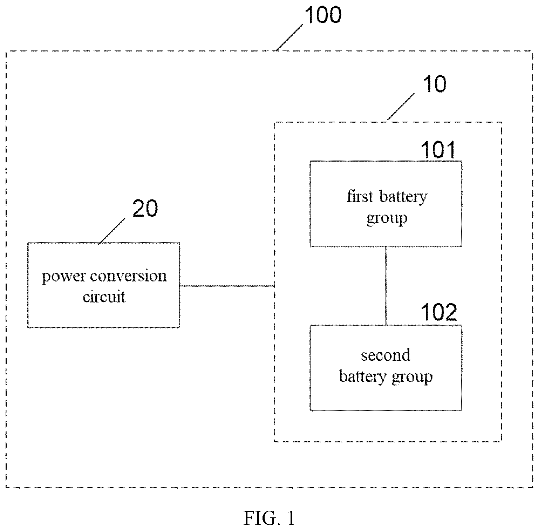

FIG. 1 is a schematic diagram of a battery self-heating circuit shown according to an exemplary embodiment. As shown in FIG. 1, embodiments of the present invention provide a battery self-heating circuit 100, and the battery self-heating circuit 100 includes a battery pack 10 and a power conversion circuit 20. The battery pack 10 includes a first battery group 101 and a second battery group 102 connected in series. The power conversion circuit 20 is configured to perform electric power exchange between the first battery group 101 and the second battery group 102 to realize self-heating of the battery pack 10. For example, the electric power may be controlled by the power conversion circuit 20 to be exchanged between the first battery group 101 and the second battery group 102 to realize the self-heating of the battery pack 10. By controlling a switching circuit in the power conversion circuit 20, and utilizing an energy storage circuit in the power conversion circuit 20 as an energy transmission intermediary, a ping-pong current is formed between the first battery group 101 and the second battery group 102, the first battery group 101 and the second battery group 102 are allowed to cyclically charge and discharge each other, the electric power exchange is continuously performed, the Joule heat is generated by utilizing the battery internal resistance, and the first battery group 101 and the second battery group 102 are heated evenly, comprehensively and quickly, thus completing the self-heating of the battery pack 10.

To sum up, embodiments of the present invention provide a battery self-heating circuit, and the battery self-heating circuit includes a battery pack and a power conversion circuit; the battery pack includes a first battery group and a second battery group connected in series; the power conversion circuit is configured to perform electric power exchange between the first battery group and the second battery group to realize the self-heating of the battery pack. Embodiments of the present invention utilize the high impedance characteristics of the battery at the low temperature to generate a large amount of electrochemical thermal energy in the process of charging and discharging, to realize the heating of the battery from inside. This battery heating method effectively overcomes the limitation of the heating speed due to the low thermal conductivity of the battery's own material, and simplifies the heat conduction path. Therefore, the battery self-heating circuit has the advantages of fast heating speed, low energy consumption and high heating temperature uniformity of the battery.

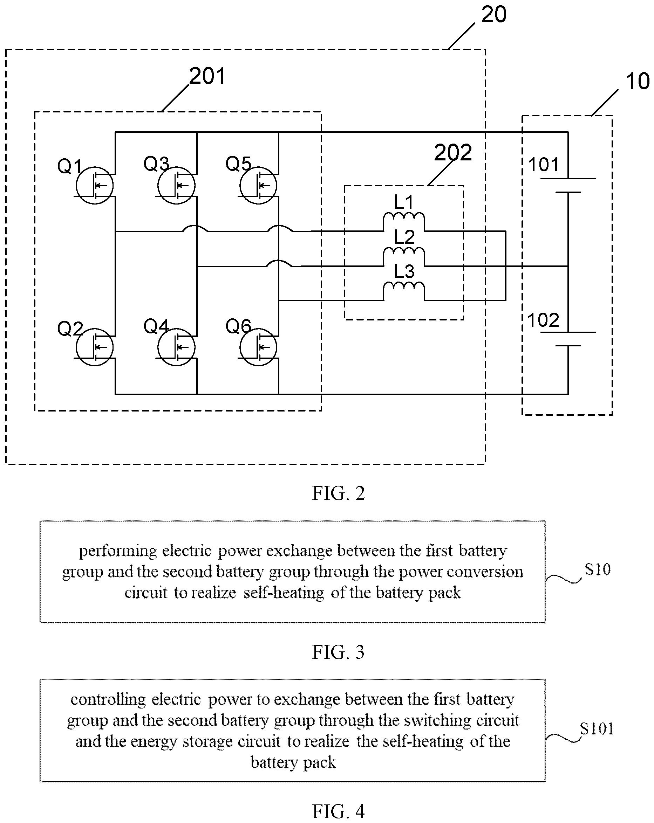

FIG. 2 is a schematic diagram of a battery self-heating circuit shown according to an exemplary embodiment. As shown in FIG. 2, the power conversion circuit 20 includes: a switching circuit 201 and an energy storage circuit 202. The switching circuit 201 is connected to the battery pack 10 through the energy storage circuit 202. The energy storage circuit 202 and the switching circuit 201 are configured to control the electric power exchange between the first battery group 101 and the second battery group 102 to realize the self-heating of the battery pack 10.

In some embodiments, the energy storage circuit 202 and the switching circuit 201 are configured to receive a first electric power output by the first battery group 101 and release the first electric power to the second battery group 102.

The energy storage circuit 202 and the switching circuit 201 are also configured to receive a second electric power output by the second battery group 102 and release the second electric power to the first battery group 101.

In some embodiments, the switching circuit 201 includes a first switching tube Q1, a second switching tube Q2, a third switching tube Q3, a fourth switching tube Q4, a fifth switching tube Q5, and a sixth switching tube Q6; and the energy storage circuit 202 includes: a first energy storage inductor L1, a second energy storage inductor L2 and a third energy storage inductor L3.

The first switching tube Q1 and the second switching tube Q2 are connected in series between a positive electrode of the first battery group 101 and a negative electrode of the second battery group 102. The third switching tube Q3 and the fourth switching tube Q4 are connected in series between the positive electrode of the first battery group 101 and the negative electrode of the second battery group 102. The fifth switching tube Q5 and the sixth switching tube Q6 are connected in series between the positive electrode of the first battery group 101 and the negative electrode of the second battery group 102. The first energy storage inductor L1 is connected in series between a connection point of the first switching tube Q1 and the second switching tube Q2 and a negative electrode of the first battery group 101. The second energy storage inductor L2 is connected in series between a connection point of the third switching tube Q3 and the fourth switching tube Q4 and the negative pole of the first battery group 101. The third energy storage inductor L3 is connected in series between a connection point of the fifth switching tube Q5 and the sixth switching tube Q6 and the negative electrode of the first battery group 101.

For example, the first switching tube Q1, the third switching tube Q3 and the fifth switching tube Q5 may be opened, and the second switching tube Q2, the fourth switching tube Q4 and the sixth switching tube Q6 may be closed to control the first energy storage inductor L1, the second energy storage inductor L2 and the third energy storage inductor L3 to receive the first electric power from the first battery group 101 and store the first electric power.

Then the second switching tube Q2, the fourth switching tube Q4 and the sixth switching tube Q6 are opened, and the first switching tube Q1, the third switching tube Q3 and the fifth switching tube Q5 are closed, to control the first energy storage inductor L1, the second energy storage inductor L2 and the third energy storage inductor L3 to send the first electric power to the second battery group 102.

The above steps are equivalent to the first battery group 101 charging the second battery group 102. At this moment, the first energy storage inductor L1, the second energy storage inductor L2 and the third energy storage inductor L3 have released energy, because the first switching tube Q1, the third switching tube Q3 and the fifth switching tube Q5 are still in the closed state, the second switching tube Q2, the fourth switching tube Q4 and the sixth switching tube Q6 are in the open state, the first energy storage inductor L1, the second energy storage inductor L2 and the third energy storage inductor L3 may absorb energy (the second electric power) from the second battery group 102 in turn, when the first energy storage inductor L1, the second energy storage inductor L2 and the third energy storage inductor L3 are saturated, the second switching tube Q2, the fourth switching tube Q4 and the sixth switching tube Q6 are closed, and the first switching tube Q1, the third switching tube Q3 and the fifth switching tube Q5 are opened to control the first energy storage inductor L1, the second energy storage inductor L2 and the third energy storage inductor L3 to send the second electric power to the first battery group 101, to complete charging of the first battery group 101 by the second battery group 102.

It should be noted that the above sequence of steps is only to describe the process of cyclic charging and discharging each other of the first battery group 101 and the second battery group 102, and there is no specific sequence between the first battery group 101 charging the second battery group 102 or the second battery group 102 charging the first battery group 101.

Repeating the above steps, under the control of a certain switching frequency, a rapid repeated charging and discharging action may be formed between the first battery group 101 and the second battery group 102, and under the action of the internal resistance of the battery, a large amount of electrochemical thermal energy is generated, so that the first battery group 101 and the second battery group 102 are rapidly heated up, so that the rapid self-heating of the battery pack 10 is completed.

It is worth mentioning that when the power of the first battery group 101 is greater than the power of the second battery group 102, and the temperature of the battery pack 10 is greater than the temperature threshold (for example, 20 °C), the first electric power is controlled to be greater than the second electric power by controlling an opening time of the first switching tube Q1, the third switching tube Q3 and the fifth switching tube Q5 to be greater than an opening time of the second switching tube Q2, the fourth switching tube Q4 and the sixth switching tube Q6, to perform equalization of the power of the first battery group 101 to the second battery group 102 during the self-heating of the battery pack 10.

When the power of the first battery group 101 is less than the power of the second battery group 102, and the temperature of the battery pack 10 is greater than the temperature threshold (for example, 20 °C), the first electric power is controlled to be less than the second electric power by controlling an opening time of the first switching tube Q1, the third switching tube Q3 and the fifth switching tube Q5 to be less than an opening time of the second switching tube Q2, the fourth switching tube Q4 and the sixth switching tube Q6, to perform equalization of the power of the second battery group 102 to the first battery group 101 during the self-heating of the battery pack 10.

To sum up, embodiments of the present invention provide a battery self-heating circuit, and the battery self-heating circuit includes a battery pack and a power conversion circuit; the battery pack includes a first battery group and a second battery group connected in series; and the power conversion circuit is configured to perform electric power exchange between the first battery group and the second battery group to realize the self-heating of the battery pack. Embodiments of the present invention utilize the high impedance characteristics of the battery at low temperature to generate a large amount of electrochemical thermal energy in the process of charging and discharging, to realize the heating of the battery from inside. This battery heating method effectively overcomes the limitation of the heating speed due to the low thermal conductivity of the battery's own material, and simplifies the heat conduction path. Therefore, the battery self-heating circuit has the advantages of fast heating speed, low energy consumption and high heating temperature uniformity of the battery. In addition, by controlling the opening time of the switching tubes, the battery may be self-heated and the power equalization inside the battery pack may be completed, to improve the performance of the entire battery pack and prolong the service life of the battery pack.

In some embodiments, a connection point of the first energy storage inductor L1, the second energy storage inductor L2 and the third energy storage inductor L3 includes a motor neutral point of an electric vehicle, and the motor neutral point is connected to a connection point of the first battery group 101 and the second battery group 102. In this way, by reusing the inductors in a three-phase winding circuit of a motor of the electric vehicle as an energy storage device of the battery self-heating circuit 100, the implementation cost of the battery self-heating circuit 100 may be reduced.

In some embodiments, the first switching tube Q1, the second switching tube Q2, the third switching tube Q3, the fourth switching tube Q4, the fifth switching tube Q5 and the sixth switching tube Q6 include a power device of an electric drive system of the electric vehicle. In this way, by reusing a semiconductor power device of the electric drive system of electric vehicle, the implementation cost of the battery self-heating circuit 100 may be further reduced.

FIG. 3 is a flow chart of a battery self-heating method shown according to an exemplary embodiment. As shown in FIG. 3, embodiments of the present invention provides a battery self-heating method applicable to a battery self-heating circuit 100, the battery self-heating circuit 100 includes a battery pack 10 and a power conversion circuit 20, the battery pack 10 includes a first battery group 101 and a second battery group 102 connected in series; and the method may include the following steps.

In the step S10, an electric power exchange is performed between the first battery group and the second battery group through the power conversion circuit to realize self-heating of the battery pack.

In this step, the electric power exchange is performed between the first battery group 101 and the second battery group 102 through the power conversion circuit 20 to realize the self-heating of the battery pack 10. For example, the electric power may be controlled by the power conversion circuit 20 to be exchanged between the first battery group 101 and the second battery group 102 to realize the self-heating of the battery pack 10. By controlling the switching circuit in the power conversion circuit 20, and utilizing the energy storage circuit in the power conversion circuit 20 as an energy transfer intermediary, a ping-pong current is formed between the first battery group 101 and the second battery group 102, the first battery group 101 and the second battery group 102 are allowed to cyclically charge and discharge each other, the electric power exchange is continuously performed, the Joule heat is generated by utilizing the battery internal resistance, and the first battery group 101 and the second battery group 102 are heated evenly, comprehensively and quickly, thus completing the self-heating of the battery pack 10.

To sum up, embodiments of the present invention provide a battery self-heating method applicable to a battery self-heating circuit, the battery self-heating circuit includes a battery pack and a power conversion circuit, and the battery pack includes a first battery group and a second battery group connected in series. The method includes: performing electric power exchange between the first battery group and the second battery group through the power conversion circuit to realize the self-heating of the battery pack. Embodiments of the present invention utilize the high impedance characteristics of the battery at low temperature to generate a large amount of electrochemical thermal energy in the process of charging and discharging, to realize the heating of the battery from inside. This battery heating method effectively overcomes the limitation of the heating speed due to the low thermal conductivity of the battery's own material, and simplifies the heat conduction path. Therefore, the battery self-heating circuit has the advantages of fast heating speed, low energy consumption and high heating temperature uniformity of the battery.

Referring to FIG. 2, the power conversion circuit 20 includes a switching circuit 201 and an energy storage circuit 202, and the switching circuit 201 is connected to the battery pack 10 through the energy storage circuit 202. FIG. 4 is a flow chart of a battery self-heating method shown according to an exemplary embodiment. As shown in FIG. 4, performing the electric power exchange between the first battery group and the second battery group through the power conversion circuit to realize the self-heating of the battery pack may include the following steps.

In the step S101, the electric power is controlled to be exchanged between the first battery group and the second battery group through the switching circuit and the energy storage circuit to realize the self-heating of the battery pack.

In this step, the electric power is controlled to be exchanged between the first battery group 101 and the second battery group 102 through the switching circuit 201 and the energy storage circuit 202 to realize the self-heating of the battery pack 10. For example, the energy storage circuit 202 and the switching circuit 201 are configured to receive the first electric power output by the first battery group 101 and release the first electric power to the second battery group 102. The energy storage circuit 202 and the switching circuit 201 are also configured to receive the second electric power output by the second battery group 102 and release the second electric power to the first battery group 101.

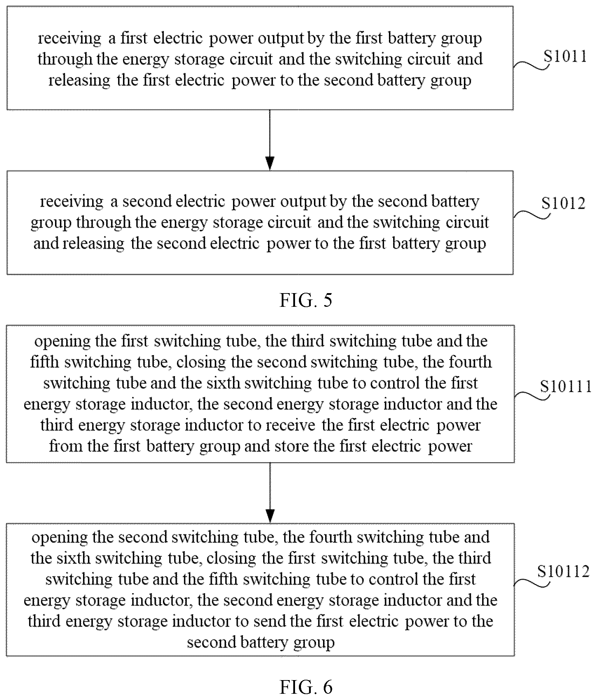

FIG. 5 is a flow chart of a battery self-heating method shown according to an exemplary embodiment. As shown in FIG. 5, controlling the electric power to be exchanged between the first battery group and the second battery group through the switching circuit and the energy storage circuit to realize the self-heating of the battery pack may include the following steps.

The following steps are repeatedly performed through the energy storage circuit 202 and the switching circuit 201 to realize the self-heating of the battery pack 10:

In the step S1011, the first electric power output by the first battery group is received through the energy storage circuit and the switching circuit and the first electric power is released to the second battery group.

In this step, the first electric power output by the first battery group 101 is received through the energy storage circuit 202 and the switching circuit 201 and the first electric power is released to the second battery group 102.

In the step S1012, the second electric power output by the second battery group is received through the energy storage circuit and the switching circuit and the second electric power is released to the first battery group.

In this step, the second electric power output by the second battery group 102 is received through the energy storage circuit 202 and the switching circuit 201 and the second electric power is released to the first battery group 101.

In some embodiments, when the power of the first battery group 101 is greater than the power of the second battery group 102, the first electric power is controlled to be greater than the second electric power by controlling an opening time of the first switching tube Q1, the third switching tube Q3 and the fifth switching tube Q5 to be greater than an opening time of the second switching tube Q2, the fourth switching tube Q4 and the sixth switching tube Q6, to perform equalization of the power of the first battery group 101 to the second battery group 102 during the self-heating of the battery pack 10.

When the power of the first battery group 101 is less than the power of the second battery group 102, the first electric power is controlled to be less than the second electric power by controlling the opening time of the first switching tube Q1, the third switching tube Q3 and the fifth switching tube Q5 to be less than the opening time of the second switching tube Q2, the fourth switching tube Q4 and the sixth switching tube Q6, to perform equalization of the power of the second battery group 102 to the first battery group 101 during the self-heating of the battery pack 10.

Referring to FIG. 2, the switching circuit 201 includes the first switching tube Q1, the second switching tube Q2, the third switching tube Q3, the fourth switching tube Q4, the fifth switching tube Q5, and the sixth switching tube Q6; and the energy storage circuit 202 includes the first energy storage inductor L1, the second energy storage inductor L2 and the third energy storage inductor L3. The first switching tube Q1 and the second switching tube Q2 are connected in series between the positive electrode of the first battery group 101 and the negative electrode of the second battery group 102. The third switching tube Q3 and the fourth switching tube Q4 are connected in series between the positive electrode of the first battery group 101 and the negative electrode of the second battery group 102. The fifth switching tube Q5 and the sixth switching tube Q6 are connected in series between the positive electrode of the first battery group 101 and the negative electrode of the second battery group 102. The first energy storage inductor L1 is connected in series between the connection point of the first switching tube Q1 and the second switching tube Q2 and the negative electrode of the first battery group 101. The second energy storage inductor L2 is connected in series between the connection point of the third switching tube Q3 and the fourth switching tube Q4 and the negative pole of the first battery group 101. The third energy storage inductor L3 is connected in series between the connection point of the fifth switching tube Q5 and the sixth switching tube Q6 and the negative electrode of the first battery group 101. FIG. 6 is a flow chart of a battery self-heating method shown according to an exemplary embodiment. As shown in FIG. 6, receiving the first electric power output by the first battery group through the energy storage circuit and the switching circuit and releasing the first electric power to the second battery group may include the following steps.

In the step S10111, the first switching tube, the third switching tube and the fifth switching tube are opened, and the second switching tube, the fourth switching tube and the sixth switching tube are closed to control the first energy storage inductor, the second energy storage inductor and the third energy storage inductor to receive the first electric power from the first battery group and store the first electric power.

In this step, the first switching tube Q1, the third switching tube Q3 and the fifth switching tube Q5 are opened, and the second switching tube Q2, the fourth switching tube Q4 and the sixth switching tube Q6 are closed to control the first energy storage inductor L1, the second energy storage inductor L2 and the third energy storage inductor L3 to receive the first electric power from the first battery group 101 and store the first electric power.

In step S10112, the second switching tube, the fourth switching tube and the sixth switching tube are opened, and the first switching tube, the third switching tube and the fifth switching tube are closed to control the first energy storage inductor, the second energy storage inductor and the third energy storage inductor to send the first electric power to the second battery group.

In this step, the second switching tube Q2, the fourth switching tube Q4 and the sixth switching tube Q6 are opened, and the first switching tube Q1, the third switching tube Q3 and the fifth switching tube Q5 are closed to control the first energy storage inductor L1, the second energy storage inductor L2 and the third energy storage inductor L3 to send the first electric power to the second battery group 102.

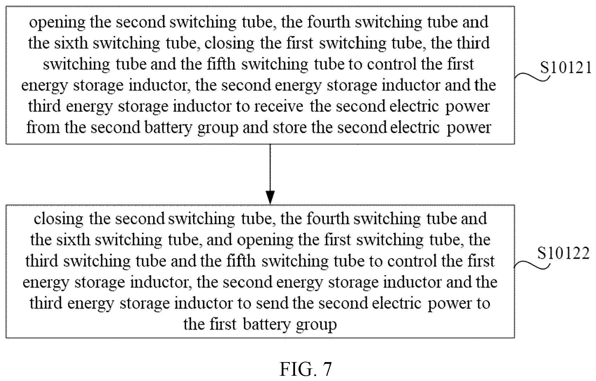

FIG. 7 is a flow chart of a battery self-heating method shown according to an exemplary embodiment. As shown in FIG. 7, receiving the second electric power output by the second battery group through the energy storage circuit and the switching circuit and releasing the second electric power to the first battery group may include the following steps.

In the step S10121, the second switching tube, the fourth switching tube and the sixth switching tube are opened, and the first switching tube, the third switching tube and the fifth switching tube are closed to control the first energy storage inductor, the second energy storage inductor and the third energy storage inductor to receive the second electric power from the second battery group and store the second electric power.

In this step, the second switching tube Q2, the fourth switching tube Q4 and the sixth switching tube Q6 are opened, and the first switching tube Q1, the third switching tube Q3 and the fifth switching tube Q5 are closed to control the first energy storage inductor L1, the second energy storage inductor L2 and the third energy storage inductor L3 to receive the second electric power from the second battery group 102 and store the second electric power.

In step S10122, the second switching tube, the fourth switching tube and the sixth switching tube are closed, and the first switching tube, the third switching tube and the fifth switching tube are opened to control the first energy storage inductor, the second energy storage inductor and the third energy storage inductor to send the second electric power to the first battery group.

In this step, the second switching tube Q2, the fourth switching tube Q4 and the sixth switching tube Q6 are closed, and the first switching tube Q1, the third switching tube Q3 and the fifth switching tube Q5 are opened to control the first energy storage inductor L1, the second energy storage inductor L2 and the third energy storage inductor L3 to send second electric power to the first battery group 101.

To sum up, embodiments of the present invention provide a battery self-heating method appliable to a battery self-heating circuit, the battery self-heating circuit includes a battery pack and a power conversion circuit, and the battery pack includes a first battery group and a second battery group connected in series. The method includes: performing electric power exchange between the first battery group and the second battery group through the power conversion circuit to realize the self-heating of the battery pack. Embodiments of the present invention utilize the high impedance characteristics of the battery at low temperature to generate a large amount of electrochemical thermal energy in the process of charging and discharging, to realize the heating of the battery from inside. This battery heating method effectively overcomes the limitation of the heating speed due to the low thermal conductivity of the battery's own material, and simplifies the heat conduction path. Therefore, the battery self-heating circuit has the advantages of fast heating speed, low energy consumption and high heating temperature uniformity of the battery. In addition, by controlling the opening time of the switch tubes, the battery may be self-heated and the power equalization inside the battery pack may be completed, to improve the performance of the entire battery pack and prolong the service life of the battery pack.

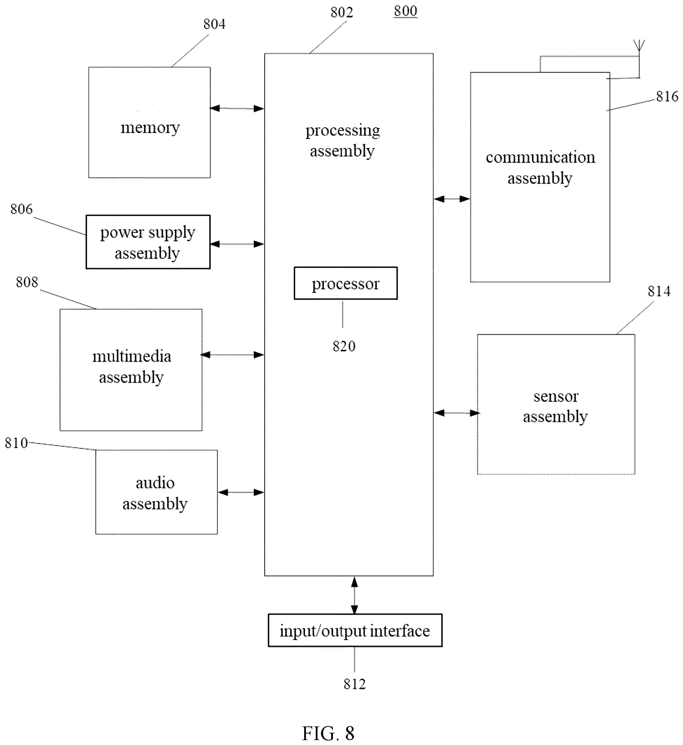

FIG. 8 is a block diagram of a battery self-heating control device shown according to an exemplary embodiment. With reference to FIG. 8, the battery self-heating control device 800 may include one or more of the following components: a processing assembly 802, a memory 804, a power supply assembly 806, a multimedia assembly 808, an audio assembly 810, an input/output interface 812, a sensor assembly 814, and a communication assembly 816.

The processing assembly 802 typically controls an overall operation of the device 800, such as those associated with display, telephone calls, data communications, camera operations, and recording operations. The processing assembly 802 may include one or more processors 820 to execute instructions to complete all or part of the steps of the method described above. In addition, the processing assembly 802 may include one or more modules to facilitate interaction between the processing assembly 802 and other assemblies. For example, the processing assembly 802 may include a multimedia module to facilitate interaction between the multimedia assembly 808 and the processing assembly 802.

The memory 804 is configured to store various types of data to support operations on the device 800. Examples of this data include instructions for any application or method operated on the device 800, contact data, phonebook data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power supply assembly 806 provides power to the various assemblies of the device 800. The power supply assembly 806 may include a power management system, one or more power sources, and other assemblies associated with generating, managing, and distributing power for the device 800.

The multimedia assembly 808 includes a screen providing an output interface between the device 800 and the user. In some embodiments, the screen may include a liquid crystal display (LCD) and a touch panel (TP). If the screen includes the touch panel, the screen may be implemented as a touch screen to receive an input signal from the user. The touch panel includes one or more touch sensors to sense touch, swipe, and gestures on the touch panel. The touch sensor may not only sense the boundary of the touch or swipe action, but also detect the duration and pressure associated with the touch or swipe action. In some embodiments, the multimedia assembly 808 includes a front-facing camera and/or a rear-facing camera. When the device 800 is in operating mode, such as shooting mode or video mode, the front camera and/or rear camera may receive external multimedia data. Each front and rear camera may be a fixed optical lens system or have focal length and optical zoom capabilities.

The audio assembly 810 is configured to output and/or input an audio signal. For example, the audio assembly 810 includes a microphone (MIC) that is configured to receive an external audio signal when the device 800 is in an operating mode, such as call mode, record mode, and speech recognition mode. The received audio signal may be further stored in memory 804 or sent through a communication assembly 816. In some embodiments, the audio assembly 810 further includes a speaker for outputting an audio signal.

The input/output interface 812 provides an interface between the processing assembly 802 and a peripheral interface module, which may be a keyboard, a click wheel, a button, etc. These buttons may include, but are not limited to: a home button, a volume button, a start button, and a lock button.

The sensor assembly 814 includes one or more sensors that are configured to provide a condition assessment of various aspects of the device 800. For example, the sensor assembly 814 may detect the on/off state of the device 800, the relative positioning of the assembly, for example, the assembly is a display and a keypad of the device 800. The sensor assembly 814 may also detect a change in the position of an assembly of the device 800 or of the device 800, the presence or absence of a contact of a user with the device 800, and the orientation or acceleration/deceleration of the device 800 and the temperature change of the device 800. The sensor assembly 814 may include a proximity sensor configured to detect the presence of nearby objects without any physical contact. The sensor assembly 814 may also include a light sensor, such as a CMOS or CCD image sensor, for use in imaging applications. In some embodiments, the sensor assembly 814 may also include an accelerometer, a gyroscope sensor, a magnetic sensor, a pressure sensor, or a temperature sensor.

The communication assembly 816 is configured to facilitate wired or wireless communication between the device 800 and other apparatuses. The device 800 may be connected to a wireless network based on communication standards, such as WiFi, 2G or 3G, or a combination thereof. In an exemplary embodiment, a communication assembly 816 receives a broadcast signal or broadcast-related information from an external broadcast management system over a broadcast channel. In an exemplary embodiment, the communication assembly 816 further includes a near-field communication (NFC) module to facilitate short-range communication. For example, the NFC module may be implemented based on Radio Frequency Identification (RFID) technology, Infrared Data Association (IrDA) technology, Ultra-Wideband (UWB) technology, Bluetooth (BT) technology and other technologies.

In an exemplary embodiment, the device 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the above method.

In an exemplary embodiment, a non-temporary computer-readable storage medium including instructions, such as a memory 804 including instructions, which may be executed by a processor 820 of the device 800 to accomplish the method. For example, the non-temporary computer-readable storage medium may be a ROM, random access memory (RAM), CD-ROM, tape, floppy disk, optical data storage device, etc.

In addition to being an independent electronic device, the device may also be a part of an independent electronic device. For example, in an embodiment, the device may be an integrated circuit (IC) or a chip, in which the integrated circuit may be an IC or a collection of a plurality of ICs; the chip may include, but is not limited to, the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC, System-on-Chip or System-on-Chip), etc. The integrated circuits or chips described above may be configured to execute executable instructions (or code) to achieve the battery self-heating method described above. The executable instructions may be stored in the integrated circuit or chip, or may be obtained from other devices or apparatuses, such as the integrated circuit or chip including a processor, memory, and an interface for communicating with other devices. The executable instructions may be stored in the memory, and when the executable instructions are executed by the processor, the battery self-heating method described above is realized; alternatively, the integrated circuit or chip may receive executable instructions through the interface and transmit them to the processor for execution, to realize the battery self-heating method described above.

In another exemplary embodiment, a computer program product is also provided. The computer program product includes a computer program capable of being executed by a programmable device having a code portion for executing the battery self-heating method described above when executed by the programmable apparatus.

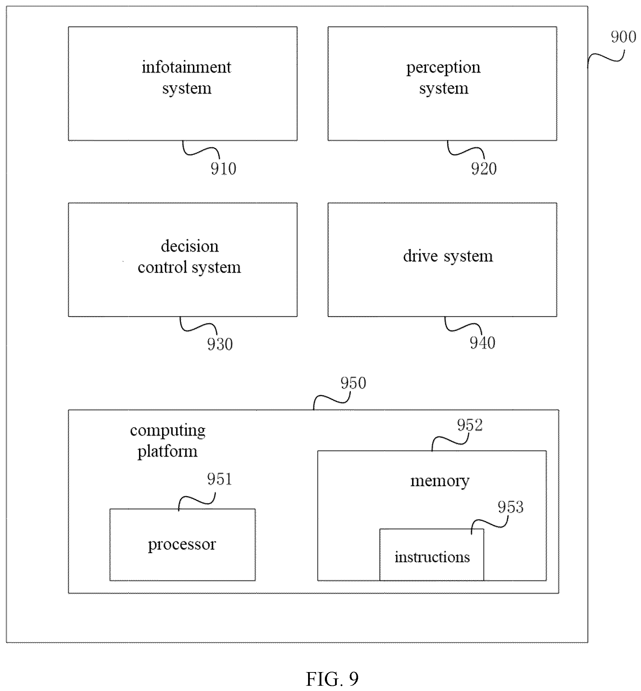

FIG. 9 is a block diagram of a vehicle shown according to an exemplary embodiment. With reference to FIG. 9, the vehicle 900 may include a battery self-heating circuit 100 (not shown in the figure), a battery self-heating control device 800 (not shown in the figure), a domain controller 900 and various subsystems, such as, an infotainment system 910, a perception system 920, a decision control system 930, a drive system 940 and a computing platform 950. The vehicle 900 may also include more or fewer subsystems, and each subsystem may include a plurality of components. In addition, each subsystem and component of the vehicle 900 may be interconnected wired or wirelessly.

In some embodiments, the infotainment system 910 may include a communication system, an entertainment system and a navigation system, etc.

The perception system 920 may include several types of sensors that are configured to sense information about the environment around the vehicle 900. For example, the perception system 920 may include a global positioning system (the global positioning system may be a GPS system, a Beidou system or other positioning system), an inertial measurement unit (IMU), a lidar, millimeter-wave radar, ultrasonic radar, and a camera device.

The decision control system 930 may include a computing system, a vehicle controller, a steering system, a throttle and a braking system.

The drive system 940 may include assemblies that provide the power movement for the vehicle 900. In one embodiment, the drive system 940 may include an engine, an energy source, a transmission system and wheels. The engine may be one or more combinations of an internal combustion engine, an electric motor, or a compressed air engine. The engine is capable of converting the energy provided by the energy source into mechanical energy.

Some or all of the functions of the vehicle 900 are controlled by the computing platform 950. The computing platform 950 may include at least one processor 951 and a memory 952, and the processor 951 may execute instructions 953 stored in the memory 952.

The processor 951 may be any conventional processor, such as a commercially available CPU. For example, the processor may also include a Graphic Process Unit (GPU), Field Programmable Gate Array (FPGA), System-on-Chip (SOC), Application Specific Integrated Circuit (ASIC), or a combination thereof.

The memory 952 may be implemented by any type of volatile or non-volatile memory device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

In addition to the instructions 953, the memory 952 may also store data, such as road maps, route information, vehicle location, direction, speed, and other data. The data stored in the memory 952 may be used by the computing platform 950.

In an embodiment of the present invention, the processor 951 may execute instructions 953 to complete all or part of the steps of the battery self-heating method described above.
In another exemplary embodiment, a computer program product is also provided, the computer program product includes a computer program capable of being executed by a programmable device having a code portion for executing the battery self-heating method described above when executed by the programmable device.

## Claims

1. A battery self-heating circuit (100), comprising:
a battery pack (10) comprising a first battery group (101) and a second battery group (102) connected in series; and
a power conversion circuit (102) configured to perform electric power exchange between the first battery group (101) and the second battery group (102) to realize self-heating of the battery pack (10).

2. The battery self-heating circuit (100) according to claim 1, wherein
the power conversion circuit (102) comprises a switching circuit (201) and an energy storage circuit (202);
the switching circuit (201) is connected to the battery pack (10) through the energy storage circuit (202); and
the energy storage circuit (202) and the switching circuit (201) are configured to control the electric power exchange between the first battery group (101) and the second battery group (102) to realize the self-heating of the battery pack (10).

3. The battery self-heating circuit (100) according to claim 2, wherein
the energy storage circuit (202) and the switching circuit (201) are configured to receive a first electric power output by the first battery group (101) and release the first electric power to the second battery group (102); and
the energy storage circuit (202) and the switching circuit (201) are also configured to receive a second electric power output by the second battery group (102) and release the second electric power to the first battery group (101).

4. The battery self-heating circuit (100) according to claim 2 or 3, wherein
the switching circuit (201) comprises a first switching tube (Q1), a second switching tube (Q2), a third switching tube (Q3), a fourth switching tube (Q4), a fifth switching tube (Q5), and a sixth switching tube (Q6), and the energy storage circuit (202) comprises a first energy storage inductor (L1), a second energy storage inductor (L2) and a third energy storage inductor (L3);
the first switching tube (Q1) and the second switching tube (Q2) are connected in series between a positive electrode of the first battery group (101) and a negative electrode of the second battery group (102);
the third switching tube (Q3) and the fourth switching tube (Q4) are connected in series between the positive electrode of the first battery group (101) and the negative electrode of the second battery group (102);
the fifth switching tube (Q5) and the sixth switching tube (Q6) are connected in series between the positive electrode of the first battery group (101) and the negative electrode of the second battery group (102);
the first energy storage inductor (L1) is connected in series between a connection point of the first switching tube (Q1) and the second switching tube (Q2) and the negative electrode of the first battery group (101);
the second energy storage inductor (L2) is connected in series between a connection point of the third switch and the fourth switch and the negative electrode of the first battery group (101); and
the third energy storage inductor (L3) is connected in series between a connection point of the fifth switch and the sixth switch and the negative electrode of the first battery group (101).

5. The battery self-heating circuit (100) according to claim 4, wherein a connection point of the first energy storage inductor (L1), the second energy storage inductor (L2) and the third energy storage inductor (L3) comprises a motor neutral point of an electric vehicle, and the motor neutral point is connected with a connection point of the first battery group (101) and the second battery group (102).

6. The battery self-heating circuit (100) according to claim 4 or 5, wherein the first switching tube (Q1), the second switching tube (Q2), the third switching tube (Q3), the fourth switching tube (Q4), the fifth switching tube (Q5) and the sixth switching tube (Q6) comprise a power device of an electric drive system of the electric vehicle.

7. A battery self-heating method, applicable to a battery self-heating circuit (100), the battery self-heating circuit (100) comprising a battery pack (10) and a power conversion circuit (102), the battery pack (10) comprising a first battery group (101) and a second battery group (102) connected in series, the method comprising:
performing (S10) electric power exchange between the first battery group (101) and the second battery group (102) through the power conversion circuit (102) to realize self-heating of the battery pack (10).

8. The method according to claim 7, wherein the power conversion circuit (102) comprises a switching circuit (201) and an energy storage circuit (202), and the switching circuit (201) is connected to the battery pack (10) through the energy storage circuit (202);
performing (S10) electric power exchange between the first battery group (101) and the second battery group (102) through the power conversion circuit (102) to realize the self-heating of the battery pack (10) comprising:
controlling (S101) electric power to exchange between the first battery group (101) and the second battery group (102) through the switching circuit (201) and the energy storage circuit (202) to realize the self-heating of the battery pack (10).

9. The method according to claim 8, wherein controlling (S101) electric power to exchange between the first battery group (101) and the second battery group (102) through the switching circuit (201) and the energy storage circuit (202) to realize the self-heating of the battery pack (10) comprises:
repeatedly performing the following steps through the energy storage circuit (202) and the switching circuit (201) to realize the self-heating of the battery pack (10):
receiving (S1011) a first electric power output by the first battery group (101) through the energy storage circuit (202) and the switching circuit (201) and releasing the first electric power to the second battery group (102); and
receiving (S1012) a second electric power output by the second battery group (102) through the energy storage circuit (202) and the switching circuit (201) and releasing the second electric power to the first battery group (101).

10. The method according to claim 9, wherein the switching circuit (201) comprises: a first switching tube (Q1), a second switching tube (Q2), a third switching tube (Q3), a fourth switching tube (Q4), a fifth switching tube (Q5), and a sixth switching tube (Q6), and the energy storage circuit (202) comprises: a first energy storage inductor (L1), a second energy storage inductor (L2) and a third energy storage inductor (L3); the first switching tube (Q1) and the second switching tube (Q2) are connected in series between a positive electrode of the first battery group (101) and a negative electrode of the second battery group (102); the third switching tube (Q3) and the fourth switching tube (Q4) are connected in series between the positive electrode of the first battery group (101) and the negative electrode of the second battery group (102); the fifth switching tube (Q5) and the sixth switching tube (Q6) are connected in series between the positive electrode of the first battery group (101) and the negative electrode of the second battery group (102); the first energy storage inductor (L1) is connected in series between a connection point of the first switching tube (Q1) and the second switching tube (Q2) and a negative electrode of the first battery group (101); the second energy storage inductor (L2) is connected in series between a connection point of the third switch and the fourth switch and the negative electrode of the first battery group (101); the third energy storage inductor (L3) is connected in series between a connection point of the fifth switch and the sixth switch and the negative electrode of the first battery group (101);
receiving (S1011) the first electric power output by the first battery group (101) through the energy storage circuit (202) and the switching circuit (201) and releasing the first electric power to the second battery group (102) comprising:
opening (S10111) the first switching tube (Q1), the third switching tube (Q3) and the fifth switching tube (Q5), and closing the second switching tube (Q2), the fourth switching tube (Q4) and the sixth switching tube (Q6) to control the first energy storage inductor (L1), the second energy storage inductor (L2) and the third energy storage inductor (L3) to receive the first electric power from the first battery group (101) and store the first electric power; and
opening (S10112) the second switching tube (Q2), the fourth switching tube (Q4) and the sixth switching tube (Q6), and closing the first switching tube (Q1), the third switching tube (Q3) and the fifth switching tube (Q5) to control the first energy storage inductor (L1), the second energy storage inductor (L2) and the third energy storage inductor (L3) to send the first electric power to the second battery group (102).

11. The method according to claim 10, wherein receiving (S1012) the second electric power output by the second battery group (102) through the energy storage circuit (202) and the switching circuit (201) and releasing the second electric power to the first battery group (101) comprises:
opening (S10121) the second switching tube (Q2), the fourth switching tube (Q4) and the sixth switching tube (Q6), and closing the first switching tube (Q1), the third switching tube (Q3) and the fifth switching tube (Q5) to control the first energy storage inductor (L1), the second energy storage inductor (L2) and the third energy storage inductor (L3) to receive the second electric power from the second battery group (102) and store the second electric power; and
closing (S10122) the second switching tube (Q2), the fourth switching tube (Q4) and the sixth switching tube (Q6), and opening the first switching tube (Q1), the third switching tube (Q3) and the fifth switching tube (Q5) to control the first energy storage inductor (L1), the second energy storage inductor (L2) and the third energy storage inductor (L3) to send the second electric power to the first battery group (101).

12. The battery self-heating method according to any one of claims 9-11, wherein
when power of the first battery group (101) is greater than power of the second battery group (102), and a temperature of the battery pack (10) is greater than a temperature threshold, the first electric power is controlled to be greater than the second electric power to perform equalization of the power of the first battery group (101) to the second battery group (102) during the self-heating of the battery pack (10); and
when the power of the first battery group (101) is less than the power of the second battery group (102), and the temperature of the battery pack (10) is greater than the temperature threshold, controlling the first electric power to be less than the second electric power to perform equalization of the power of the second battery group (102) to the first battery group (101) during the self-heating of the battery pack (10).

13. A battery self-heating control device (800), comprising:
a processor (820); and
a memory (804) configured to store instructions executable by the processor (820);
wherein the processor (820) is configured to execute the executable instructions to implement a method according to any one of claims 7 to 12.

14. A vehicle (900), comprising a battery self-heating circuit (100) according to any one of claims 1 to 6 and a battery self-heating control device (800) according to claim 13.

15. A non-transitory computer readable storage medium, on which computer program instructions are stored, which are configured to, when executed by a processor (820), implement the steps of a method according to any one of claims 7-12.
